(19) **Europäisches Patentamt European Patent Office Office européen des brevets**

(11) **EP 4 691 770 A1**

(12) **EUROPEAN PATENT APPLICATION**
published in accordance with Art. 153(4) EPC

(43) Date of publication:
**11.02.2026 Bulletin 2026/07**

(21) Application number: **24779797.0**

(22) Date of filing: **21.03.2024**

(51) International Patent Classification (IPC):
**B32B 27/10** (2006.01)   **B32B 27/32** (2006.01)
**B32B 27/40** (2006.01)   **B65D 65/40** (2006.01)

(52) Cooperative Patent Classification (CPC):
**B32B 27/10; B32B 27/32; B32B 27/40; B65D 65/40**

(86) International application number:
**PCT/JP2024/010897**

(87) International publication number:
**WO 2024/203674 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2023 JP 2023050756**

(71) Applicant: **Mitsui Chemicals, Inc.**
**Tokyo 104-0028 (JP)**

(72) Inventors:
• **FUKUDA, Kazuyuki**
  **Sodegaura-shi, Chiba 299-0265 (JP)**

• **YAGI, Toru**
  **Sodegaura-shi, Chiba 299-0265 (JP)**
• **YOSHIMURA, Toshihiro**
  **Tokyo 104-0028 (JP)**
• **KUSUMOTO, Masaya**
  **Sodegaura-shi, Chiba 299-0265 (JP)**
• **KAGAWA, Yasuyuki**
  **Tokyo 104-0028 (JP)**
• **NAKAGAWA, Toshihiko**
  **Sodegaura-shi, Chiba 299-0265 (JP)**
• **ENDO, Shoko**
  **Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54) **LAMINATE AND PACKAGING MATERIAL**

(57) A laminate 1 includes a paper substrate 2, a gas barrier layer 4 disposed on at least one side of the paper substrate 2, and a heat seal layer 5 disposed on at least one side of the gas barrier layer 4. An amount of the heat seal layer 5 is 1.0 g/m² or more and 7.0 g/m² or less.

FIG. 1

**Description**

TECHNICAL FIELD

The present invention relates to a laminate and a packaging material, to be specific, to a laminate including a gas barrier layer and a heat seal layer.

BACKGROUND ART

Conventionally, a laminate including a paper substrate, a gas barrier layer, and a heat seal layer has been known. Such a laminate is, for example, used as a packaging material.

As the laminate, more specifically, a gas barrier paper-based packaging product below is proposed. The gas barrier paper-based packaging product includes a paper substrate. A fixed filling resin composition (for example, acrylic resin aqueous emulsion) is coated onto one surface of the paper substrate, thereby forming a fixed filling layer of 2 g/m$^2$. A gas barrier resin composition (for example, a urethane-based hybrid gas barrier resin composition) is coated onto the surface of the fixed filling layer, thereby forming a gas barrier layer of 2.5 g/m$^2$. A heat sealing agent (for example, dispersion liquid of a polyethylene-based resin) is coated onto the surface of the gas barrier layer, thereby forming a heat seal layer of 10 g/m$^2$ (ref: for example, Patent Document 1 (Example Ca10)).

The above-described gas barrier layer imparts gas barrier properties to the gas barrier paper-based packaging product, and the heat seal layer imparts heat sealability to the gas barrier paper-based packaging product.

Citation List

Patent Document

Patent Document 1: Japanese Unexamined Patent Publication No. 2022-155999

SUMMARY OF THE INVENTION

PROBLEM TO BE SOLVED BY THE INVENTION

On the other hand, the above-described gas barrier paper-based packaging product may not have the sufficient gas barrier properties (oxygen barrier properties and water vapor barrier properties). Further, the gas barrier paper-based packaging product may require the excellent heat sealability.

The present invention provides a laminate and a packaging material having both excellent gas barrier properties and excellent heat sealability.

MEANS FOR SOLVING THE PROBLEM

The present invention [1] includes a laminate including a paper substrate, a gas barrier layer disposed on at least one side of the paper substrate, and a heat seal layer disposed on at least one side of the gas barrier layer, wherein an amount of the heat seal layer is 1.0 g/m$^2$ or more and 7.0 g/m$^2$ or less.

The present invention [2] includes the laminate described in the above-described [1], wherein a filling layer is interposed between the paper substrate and the gas barrier layer.

The present invention [3] includes the laminate described in the above-described [1] or [2], wherein the gas barrier layer contains a gas barrier resin.

The present invention [4] includes the laminate described in the above-described [3], wherein the gas barrier resin contains a gas barrier polyurethane resin.

The present invention [5] includes the laminate described in the above-described [4], wherein the gas barrier polyurethane resin contains a reaction product of an isocyanate group-terminated prepolymer and a chain extender, the isocyanate group-terminated prepolymer contains a reaction product of a polyisocyanate component and an active hydrogen group-containing component, the polyisocyanate component contains xylylene diisocyanate and/or hydrogenated xylylene diisocyanate, the active hydrogen group-containing component contains a short-chain diol having 2 to 6 carbon atoms and an active hydrogen compound containing an anionic group.

The present invention [6] includes the laminate described in any one of the above-described [1] to [5], wherein the heat seal layer contains an anionic group-containing heat sealable resin, and the anionic group-containing heat sealable resin contains at least one selected from the group consisting of an anionic group-containing polyolefin resin, an anionic group-containing (meth)acrylic resin, and an anionic group-containing polyurethane resin.

The present invention [7] includes the laminate described in the above-described [6], wherein the anionic group-containing heat sealable resin is neutralized by a neutralizing agent, and the neutralizing agent contains at least one selected from the group consisting of a hydroxide of an alkali metal, an ammonia, and an amine compound.

The present invention [8] includes the laminate described in the above-described [6] or [7], wherein a hygroscopic expansion ratio of the anionic group-containing heat sealable resin is 5000 ppm/RH% or more and 10000 ppm/RH% or less.

The present invention [9] includes a packaging material including the laminate described in any one of the above-described [1] to [8].

EFFECT OF THE INVENTION

The laminate of the present invention includes the paper substrate, the gas barrier layer, and the heat seal layer. Then, in the above-described laminate, the amount of the heat seal layer is adjusted to a predetermined range. Therefore, in the above-described laminate, it is possible to suppress a decrease in gas barrier properties by the heat seal layer, and obtain excellent heat sealability. As a result, the above-described laminate has both the excellent gas barrier properties and the excellent heat sealability.

Since the packaging material of the present invention includes the above-described laminate, it has both the excellent gas barrier properties and the excellent heat sealability.

BRIEF DESCRIPTION OF THE DRAWINGS

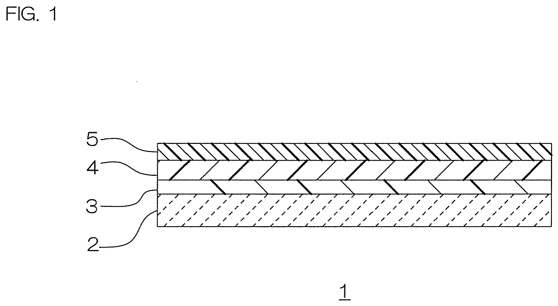

FIG. 1 shows a schematic view for illustrating one embodiment of a laminate of the present invention.

DESCRIPTION OF EMBODIMENTS

1. Laminate

In FIG. 1, a laminate 1 includes a paper substrate 2, a gas barrier layer 4 which is disposed on at least one side (upper side on the plane of the sheet) in a thickness direction of the paper substrate 2, and a heat seal layer 5 which is disposed on at least one side (upper side on the plane of the sheet) in the thickness direction of the gas barrier layer 4.

Further, the above-described laminate 1 may also further include, as an optional layer, a filling layer 3 which is interposed between the paper substrate 2 and the gas barrier layer 4. In FIG. 1, the laminate 1 includes the filling layer 3. In other words, in FIG. 1, the laminate 1 includes the paper substrate 2, the filling layer 3, the gas barrier layer 4, and the heat seal layer 5 in order from the other side in the thickness direction (lower side on the plane of the sheet) toward one side (upper side on the plane of the sheet).

(1) Paper Substrate

The paper substrate 2 is a substrate formed of paper. An example of the paper substrate 2 includes paper obtained by making pulp. Examples of the pulp include natural pulp and synthetic pulp. More specifically, examples of the paper substrate 2 include glassine paper, coated paper, single glazed kraft paper, roll paper, and cup base paper. The paper substrate 2 may be a single layer of paper or a multilayer of paper. The paper substrate 2 is appropriately selected in accordance with its application of the laminate 1.

A shape of the paper substrate 2 is not particularly limited, and is appropriately set. Examples of the shape of the paper substrate 2 include sheet-like shapes, bottle-like shapes, and cup-like shapes. As the shape of the paper substrate 2, preferably, a sheet-like shape is used.

The paper substrate 2 may be also subjected to a surface treatment, if necessary. Examples of the surface treatment include corona discharge treatments, surface coating treatments, and vapor deposition treatments.

A thickness of the paper substrate 2 is, for example, 3 $\mu$m or more, preferably 5 $\mu$m or more. Further, the thickness of the paper substrate 2 is, for example, 500 $\mu$m or less, preferably 200 $\mu$m or less.

In addition, a basis weight of the paper substrate 2 is, for example, 20 g/m$^2$ or more, preferably 30 g/m$^2$ or more. Further, the basis weight of the paper substrate 2 is, for example, 400 g/m$^2$ or less, preferably 300 g/m$^2$ or less.

(2) Filling Layer

The filling layer 3 is laminated on the paper substrate 2 so as to suppress impregnation of a gas barrier coating material (described later) with respect to the paper substrate 2. Further, the filling layer 3 is laminated on the paper substrate 2 so as to absorb unevenness on the surface of the paper substrate 2 and smooth the surface. More specifically, the filling layer 3 is disposed on at least a one-side surface of the paper substrate 2. The filling layer 3 may be also disposed on both surfaces of the paper substrate 2. The filling layer 3 is preferably disposed on only the one-side surface of the paper substrate 2.

The filling layer 3 contains, for example, a filling resin. More specifically, the filling layer 3 is, for example, formed by coating a coating material containing the filing resin (hereinafter, a filling coating material) onto the surface of the paper substrate 2 to be dried.

The filling coating material is not particularly limited, and an example thereof includes a known filling resin. More specifically, examples of the filling coating material include a solution obtained by dissolving the filling resin in a solvent and a dispersion liquid obtained by dispersing the filling resin in the solvent.

The filling resin is a resin which suppresses the impregnation of the gas barrier coating material (described later) with respect to the paper substrate 2. Examples of the filling resin include polyolefin resins, polyester resins, polyamide resins, polyvinyl resins, (meth)acrylic resins, polycarbonate resins, and cellulose resins. These may be used alone or in combination of two or more. As the filling resin, preferably, a polyolefin resin and a (meth)acrylic resin are used.

The solvent is not particularly limited, and examples thereof include water, methanol, ethanol, propanol, isopropanol, acetone, methyl ethyl ketone, ethyl acetate, tetrahydrofuran, and acetonitrile. These solvents may be used alone or in combination of two or more.

More specifically, examples of the filling coating material include a resin dispersion and a resin emulsion containing the filling resin and the solvent.

The solid content concentration of the filling coating material is, for example, 10% by mass or more, preferably 15% by mass or more, more preferably 20% by mass or more. In addition, the solid content concentration of the filling coating material is, for example, 60% by mass or less, preferably 50% by mass or less, more preferably 40% by mass or less.

A method for coating the filling coating material is not particularly limited. Examples of the coating method include dip coating methods, gravure coating methods, reverse coating methods, roll coating methods, bar coating methods, spray coating methods, and air knife coating methods. Drying conditions of the filling coating material are not particularly limited. For example, a drying temperature is, for example, 40°C or more, preferably 50°C or more. Further, the drying temperature is, for example, 200°C or less, preferably 180°C or less. Further, drying time is, for example, one second or more, preferably 30 seconds or more. Further, the drying time is, for example, 10 minutes or less, preferably five minutes or less.

Thus, the filling layer 3 is formed. An amount (dry mass) of the filling layer 3 is, for example, 1 $g/m^2$ or more, preferably 3 $g/m^2$ or more. Further, the amount (dry mass) of the filling layer 3 is, for example, 30 $g/m^2$ or less, preferably 15 $g/m^2$ or less.

(3) Gas Barrier Layer

The gas barrier layer 4 is a layer having gas barrier properties. The gas barrier properties are properties of lowering transmittance of oxygen. More specifically, the gas barrier layer 4 consists of a gas barrier resin having an oxygen permeability of a predetermined value or less. For example, the oxygen permeability of the gas barrier layer 4 having the thickness of 10 $\mu$m is, for example, 1 ($cc/m^2 \cdot day \cdot atm$) or less at room temperature. The oxygen permeability is measured using an oxygen permeability analyzer (manufactured by AMTEK MOCON, OX-TRAN 2/22H) in conformity with JIS K7126 (2006) B method. Measurement conditions are 20°C and 80 %RH (relative humidity).

The gas barrier layer 4 is disposed on the surface of the filling layer 3. In other words, the gas barrier layer 4 is disposed on the surface of the filling layer 3 on the side where the filling layer 3 is disposed with respect to the paper substrate 2. The gas barrier layer 4 may be also disposed on both surfaces of the paper substrate 2 along with the filling layer 3. The gas barrier layer 4 is preferably disposed on only the one-side surface of the paper substrate 2 along with the filling layer 3.

Examples of the gas barrier layer 4 include inorganic layers and resin layers. The inorganic layer contains, for example, a metal and/or a metal oxide. An example of the metal includes aluminum. Examples of the metal oxide include aluminum oxide and silicon oxide. More specifically, examples of the inorganic layer include metal thin film layers and metal vapor deposition layers. The resin layer contains, for example, the gas barrier resin. More specifically, examples of the resin layer include barrier coat layers and barrier film layers.

The gas barrier layer 4 is preferably the barrier coat layer containing the gas barrier resin. More specifically, the gas barrier layer 4 is, for example, formed by coating a coating material containing the gas barrier resin (hereinafter, a gas barrier coating material) onto the filling layer 3 to be dried.

The gas barrier resin is a resin having the oxygen permeability of the predetermined value or less. More specifically, the oxygen permeability of the film having the thickness of 10 $\mu$m and consisting of the gas barrier resin is, for example, 1 ($cc/m^2 \cdot day \cdot atm$) or less at the room temperature. The oxygen permeability is measured using the oxygen permeability analyzer (manufactured by AMTEK MOCON, OX-TRAN 2/22H) in conformity with JIS K7126 (2006) B method. The measurement conditions are 20°C and 80 %RH (relative humidity).

The gas barrier resin is not partaticularly limited. Examples of the gas barrier resin include gas barrier polyurethane resins and gas barrier acrylic resins. These may be used alone or in combination of two or more. From the viewpoint of the gas barrier properties, as the gas barrier resin, preferably, a gas barrier polyurethane resin is used. In other words, the gas barrier resin preferably contains a gas barrier polyurethane resin, and more preferably consists of a gas barrier polyurethane resin.

The gas barrier polyurethane resin is a resin having the oxygen permeability of the above-described predetermined value or less. The gas barrier polyurethane resin is not particularly limited, and a known gas barrier polyurethane resin is used. For example, the gas barrier polyurethane resin is contained in a polyurethane dispersion (PUD) as the gas barrier coating material.

The gas barrier polyurethane resin and the polyurethane dispersion are, for example, produced in conformity with the descriptions of paragraphs [0026] to [0111] of Japanese Unexamined Patent Publication No. 2015-044396 and paragraphs [0048] to [0141] of Japanese Unexamined Patent Publication No. 2021-115802.

More specifically, the gas barrier polyurethane resin contains, for example, a reaction product of an isocyanate group-terminated prepolymer and a chain extender, and preferably consists of a reaction product of an isocyanate group-terminated prepolymer and a chain extender. The isocyanate group-terminated prepolymer contains, for example, a reaction product of a polyisocyanate component and an active hydrogen group-containing component, and preferably consists of a reaction product of a polyisocyanate component and an active hydrogen group-containing component.

That is, a primary reaction product of the polyisocyanate component and the active hydrogen group-containing component is the isocyanate group-terminated prepolymer. Then, a secondary reaction product of the isocyanate group-terminated prepolymer and the chain extender is the gas barrier polyurethane resin.

Examples of the polyisocyanate component include known polyisocyanate components. From the viewpoint of the gas barrier properties, the polyisocyanate component preferably contains xylylene diisocyanate and/or hydrogenated xylylene diisocyanate. Further, the polyisocyanate component may contain another polyisocyanate (polyisocyanate excluding the xylylene diisocyanate and the hydrogenated xylylene diisocyanate) if necessary. Examples of another polyisocyanate include industrially widely available polyisocyanates. More specifically, examples of another polyisocyanate include pentamethylene diisocyanate (PDI), hexamethylene diisocyanate (HDI), isophorone diisocyanate (IPDI), norbornene diisocyanate (NBDI), methylenebis(cyclohexyl isocyanate) ($H_{12}$MDI), diphenylmethane diisocyanate (MDI), tolylene diisocyanate (TDI), toluidine diisocyanate (TODI), naphthalene diisocyanate (NDI), and tetramethylxylylene diisocyanate (TMXDI). These may be used alone or in combination of two or more. As another polyisocyanate, preferably, methylenebis(cyclohexyl isocyanate) ($H_{12}$MDI) is used. Further, the polyisocyanate component may be a monomer or a derivative. Examples of the derivative include multimers, isocyanurate modified products, allophanate modified products, polyol adducts, biuret modified products, urea modified products, oxadiazinetrione modified products, and carbodiimide modified products. These may be used alone or in combination of two or more.

The polyisocyanate component preferably contains the xylylene diisocyanate and/or the hydrogenated xylylene diisocyanate, and another polyisocyanate (preferably methylenebis(cyclohexyl isocyanate)). A content ratio of these may be appropriately set in accordance with its purpose and application.

The active hydrogen group-containing component is an organic compound containing an active hydrogen group. Examples of the active hydrogen group include hydroxyl groups and amino groups, and preferably, a hydroxyl group is used. Examples of the active hydrogen group-containing component include known active hydrogen group-containing compounds. From the viewpoint of the gas barrier properties, the active hydrogen group-containing component preferably contains a short-chain diol having 2 to 6 carbon atoms and an active hydrogen group-containing compound containing an anionic group.

The short-chain diol having 2 to 6 carbon atoms is an organic compound having 2 to 6 carbon atoms having two hydroxyl groups in one molecule. Examples of the short-chain diol include an alkanediol having 2 to 6 carbon atoms and an ether diol having 2 to 6 carbon atoms, and preferably, an alkanediol having 2 to 6 carbon atoms is used. Examples of the alkanediol having 2 to 6 carbon atoms include ethylene glycol, propylene glycol, 1,3-propanediol, 1,4-butylene glycol, 1,3-butylene glycol, 1,2-butylene glycol, 1,5-pentanediol, 1,6-hexanediol, and neopentyl glycol. These may be used alone or in combination of two or more. From the viewpoint of the gas barrier properties, preferably, ethylene glycol is used.

As the active hydrogen group-containing compound containing an anionic group, preferably, an organic compound having one carboxy group and two or more hydroxyl groups in one molecule in combination is used, more preferably, an organic compound having one carboxy group and two hydroxyl groups in one molecule in combination is used. An example of the organic compound having one carboxy group and two hydroxyl groups in one molecule in combination includes a carboxy group-containing diol. An example of the carboxy group-containing diol includes dihydroxyalkanoic acid. Examples of the dihydroxyalkanoic acid include 2,2-dimethylolacetic acid, 2,2-dimethylollactic acid, 2,2-dimethylolpropionic acid (also known as dimethylolpropionic acid), 2,2-dimethylolbutanoic acid, 2,2-dimethylolbutyric acid, and 2,2-dimethylolvaleric acid. These may be used alone or in combination of two or more. From the viewpoint of the water dispersibility, preferably, 2,2-dimethylolpropionic acid is used.

In the active hydrogen group-containing component, the content ratio of the short-chain diol having 2 to 6 carbon atoms and the content ratio of the active hydrogen group-containing compound containing an anionic group are appropriately set in accordance with its purpose and application.

The active hydrogen group-containing component may also further contain another polyol. Examples of another polyol include a trihydric or more low molecular weight polyol, a short-chain diol having seven or more carbon atoms, and a high molecular weight polyol. These may be used alone or in combination of two or more. As another polyol, preferably, a trihydric or more low molecular weight polyol is used, preferably, a trihydric alcohol and a tetrahydric alcohol are used. Examples of the trihydric alcohol include glycerin, 2-methyl-2-hydroxymethyl-1,3-propanediol, 2,4-dihydroxy-3-hydroxymethylpentane, 1,2,6-hexanetriol, trimethylolpropane, and 2,2-bis(hydroxymethyl)-3-butanol. Examples of the tetrahydric alcohol include tetramethylolmethane(pentaerythritol) and diglycerin. These may be used alone or in combination of two or more. As the trihydric or more low molecular weight polyol, more preferably, a trihydric alcohol is used, further more preferably, trimethylolpropane is used. Further, an example of another polyol includes an active hydrogen group-containing compound containing a nonionic group. The active hydrogen group-containing compound containing a nonionic group is used, for example, along with the above-described active hydrogen compound containing an anionic group. In addition, the active hydrogen group-containing compound containing a nonionic group may be also used, for example, instead of the above-described active hydrogen compound containing an anionic group. In the active hydrogen group-containing component, the content ratio of another polyol is appropriately set in accordance with its purpose and application.

A method for synthesizing the isocyanate group-terminated prepolymer is not particularly limited. For example, each of the components described above is blended at a predetermined equivalent ratio to be reacted. Examples of the reaction method include bulk polymerization and solution polymerization, and preferably, solution polymerization is used. In the above-described reaction, if necessary, a urethanization catalyst may be added at an appropriate ratio.

In addition, when the above-described isocyanate group-terminated prepolymer has the anionic group derived from the active hydrogen compound containing an anionic group, the isocyanate group-terminated prepolymer is neutralized by a known neutralizing agent (for example, triethylamine), thereby forming a salt of the anionic group.

The isocyanate group concentration of the isocyanate group-terminated prepolymer is, for example, 4% by mass or more, preferably 5% by mass or more, more preferably 6% by mass or more. Further, the isocyanate group concentration of the isocyanate group-terminated prepolymer is, for example, 25% by mass or less, preferably 20% by mass or less, more preferably 17% by mass or less, further more preferably 15% by mass or less.

Next, in this method, the isocyanate group-terminated prepolymer (primary reaction product) and the chain extender are reacted, thereby obtaining the gas barrier polyurethane resin (secondary reaction product). For example, by reacting the isocyanate group-terminated prepolymer with the chain extender in the water, the gas barrier polyurethane resin is generated and water-dispersed.

The chain extender is an organic compound which subjects the isocyanate group-terminated prepolymer to a chain extension reaction. The chain extender has a plurality of active hydrogen groups. Examples of the chain extender include polyamine, amino group-containing alkoxysilyl compounds, and amino alcohols (for example, 2-((2-aminoethyl) amino)ethanol).

A method for reacting the isocyanate group-terminated prepolymer with the chain extender in the water is not particularly limited. For example, first, the isocyanate group-terminated prepolymer is water-dispersed. Next, the chain extender is added to the water in which the isocyanate group-terminated prepolymer is dispersed, and the isocyanate group-terminated prepolymer is chain-extended in the water. In addition, in this method, the water can be also added after the completion of the reaction so as to adjust the solid content concentration.

By the above-described chain extension reaction, an aqueous dispersion of the gas barrier polyurethane resin (hereinafter, a primary polyurethane dispersion, a primary PUD) is obtained. The primary polyurethane dispersion (primary PUD) is an aqueous dispersion containing no additive to be described later and containing the gas barrier polyurethane resin.

The gas barrier resin is not limited to the above-described gas barrier polyurethane resin, and the gas barrier resin is preferably prepared as the aqueous dispersion of the gas barrier resin (primary aqueous dispersion).

The solid content concentration of the aqueous dispersion of the gas barrier resin (primary aqueous dispersion) is, for example, 10% by mass or more, preferably 15% by mass or more, more preferably 20% by mass or more. In addition, the solid content concentration of the aqueous dispersion of the gas barrier resin (primary aqueous dispersion) is, for example, 60% by mass or less, preferably 50% by mass or less, more preferably 40% by mass or less.

The above-described aqueous dispersion of the gas barrier resin (primary aqueous dispersion) may be used as the gas barrier coating material as it is. In other words, the gas barrier coating material may consist of, for example, the above-described aqueous dispersion of the gas barrier resin (primary aqueous dispersion).

Further, the gas barrier coating material may also contain the additive. Preferably, the gas barrier coating material contains the additive. In other words, preferably, the aqueous dispersion containing the above-described gas barrier resin and the additive (secondary aqueous dispersion) is used as the gas barrier coating material.

Examples of the additive include layered inorganic compounds, thickening inhibitors, heat-resistant stabilizers, antioxidants, light-resistant stabilizers, ultraviolet absorbers, plasticizers, antistatic agents, lubricants, anti-blocking agents, pigments, dyes, crystal nucleating agents, and curing agents. These may be used alone or in combination of two or more. From the viewpoint of the gas barrier properties, as the additive, preferably, a layered inorganic compound is used. That is, the gas barrier layer 4 preferably contains the layered inorganic compound. An addition amount and timing of addition of the additive are appropriately set in accordance with its purpose and application.

The solid content concentration of the gas barrier coating material is, for example, 10% by mass or more, preferably 15% by mass or more, more preferably 20% by mass or more. Further, the solid content concentration of the gas barrier coating material is, for example, 60% by mass or less, preferably 50% by mass or less, more preferably 40% by mass or less.

The method for coating the gas barrier coating material is not particularly limited. Examples of the coating method include dip coating methods, gravure coating methods, reverse coating methods, roll coating methods, bar coating methods, spray coating methods, and air knife coating methods. The drying conditions of the gas barrier coating material are not particularly limited. For example, the drying temperature is, for example, 40°C or more, preferably 50°C or more. Further, the drying temperature is, for example, 200°C or less, preferably 180°C or less. Further, the drying time is, for example, one second or more, preferably 30 seconds or more. Further, the drying time is, for example, 10 minutes or less, preferably five minutes or less.

Thus, the gas barrier layer 4 is formed. The amount (dry mass) of the gas barrier layer 4 is, for example, $0.1 \text{ g/m}^2$ or more, preferably $0.2 \text{ g/m}^2$ or more. Further, the amount (dry mass) of the gas barrier layer 4 is, for example, $10 \text{ g/m}^2$ or less, preferably $7 \text{ g/m}^2$ or less.

(4) Heat Seal Layer

The heat seal layer 5 is a resin layer having heat sealability. The heat seal layer 5 is disposed on the surface of the gas barrier layer 4. That is, the heat seal layer 5 is disposed on the surface of the gas barrier layer 4 on the side where the gas barrier layer 4 is disposed with respect to the paper substrate 2. The heat seal layer 5 may be also disposed on both surfaces of the paper substrate 2 along with the gas barrier layer 4. The heat seal layer 5 is preferably disposed on only the one-side surface of the paper substrate 2 along with the gas barrier layer 4.

The heat seal layer 5 contains, for example, a heat sealable resin. More specifically, the heat seal layer 5 is formed by, for example, coating the coating material containing the heat sealable resin (hereinafter, a heat sealable coating material) onto the gas barrier layer 4 to be dried.

The heat sealable resin is a resin capable of heat sealing (heat adhesion) with each other. The heat sealable resin is not particularly limited, and a known heat sealable resin is used. More specifically, examples of the heat sealable resin include polyolefin resins, (meth)acrylic resins, and polyurethane resins. These may be used alone or in combination of two or more.

From the viewpoint of productivity of the heat sealable coating material, the heat sealable resin preferably contains the anionic group. In other words, as the heat sealable resin, preferably, an anionic group-containing heat sealable resin is used. When the heat sealable resin contains the anionic group, the heat sealable resin is easily dissolved and/or dispersed in the water, so that it is possible to efficiently obtain the heat sealable coating material. Examples of the anionic group include carboxy groups (carboxylic acid group) and sulfo groups (sulfonic acid group), and preferably, a carboxy group is used. Examples of the anionic group-containing heat sealable resin include anionic group-containing polyolefin resins, anionic group-containing (meth)acrylic resins, and anionic group-containing polyurethane resins. In other words, the anionic group-containing heat sealable resin contains, for example, at least one selected from the group consisting of an anionic group-containing polyolefin resin, an anionic group-containing (meth)acrylic resin, and an anionic group-containing polyurethane resin.

[Anionic Group-Containing Polyolefin Resin]

The anionic group-containing polyolefin resin is a resin containing the anionic group and a constitutional unit derived from an olefin. Examples of the anionic group-containing polyolefin resin include unsaturated carboxylic acid-modified polyolefin resins. The unsaturated carboxylic acid-modified polyolefin resin is obtained by copolymerization of a monomer component (hereinafter, an olefin raw material monomer component) as a raw material composition.

The olefin raw material monomer component contains, for example, the olefin and an unsaturated carboxylic acid.

Examples of the olefin include $\alpha$-olefins. An example of the $\alpha$-olefin includes an $\alpha$-olefin having 1 to 20 carbon atoms. Examples of the $\alpha$-olefin having 1 to 20 carbon atoms include ethylene, propylene, 1-butene, 1-pentene, 1-hexene, 4-methyl-1-pentene, 1-octene, 1-decene, 1-dodecene, 1-tetradecene, 1-hexadecene, 1-octadecene, and 1-eicosene. These may be used alone or in combination of two or more. As the $\alpha$-olefin, preferably, an olefin having 2 to 3 carbon atoms is used, more preferably, ethylene and/or propylene are/is used, further more preferably, ethylene is used.

The content ratio of the olefin is, for example, 50% by mass or more, preferably 60% by mass or more, more preferably 70% by mass or more with respect to the total amount of the olefin raw material monomer component. Further, the content ratio of the olefin is, for example, 99% by mass or less, preferably 97% by mass or less, more preferably 95% by mass or less, further more preferably 93% by mass or less, particularly preferably 90% by mass or less with respect to the total amount of the olefin raw material monomer component.

The content ratio of the olefin in the olefin raw material monomer component is substantially the same as the content ratio of the constitutional unit derived from the olefin in the unsaturated carboxylic acid-modified polyolefin resin.

In other words, the content ratio of the constitutional unit derived from the olefin is, for example, 50% by mass or more, preferably 60% by mass or more, more preferably 70% by mass or more with respect to the total amount of the unsaturated carboxylic acid-modified polyolefin resin. In addition, the content ratio of the constitutional unit derived from the olefin is, for example, 99% by mass or less, preferably 97% by mass or less, more preferably 95% by mass or less, further more preferably 93% by mass or less, particularly preferably 90% by mass or less with respect to the total amount of the unsaturated carboxylic acid-modified polyolefin resin.

In the polyolefin resin, the content ratio of the constitutional unit derived from the olefin is, as described above, 50% by mass or more, preferably 60% by mass or more with respect to the total amount of the polyolefin resin. The polyolefin resin is distinguished from another resin containing the constitutional unit derived from the olefin by the content ratio of the constitutional unit derived from the olefin.

More specifically, in the resin other than the polyolefin resin containing the constitutional unit derived from the olefin (for example, (meth)acrylic resin to be described later), the content ratio of the constitutional unit derived from the olefin is below 50% by mass, preferably 40% by mass or less.

Examples of the unsaturated carboxylic acid include unsaturated monocarboxylic acids and unsaturated dicarboxylic acids. Examples of the unsaturated monocarboxylic acid include (meth)acrylic acids, crotonic acids, and isocrotonic acids. Examples of the unsaturated dicarboxylic acid include maleic acids, fumaric acids, tetrahydro phthalic acids, itaconic acids, citraconic acids, and norbornene dicarboxylic acids and acid anhydrides of these. These unsaturated carboxylic acids may be used alone or in combination of two or more. As the unsaturated carboxylic acid, preferably, an unsaturated monocarboxylic acid and an acid anhydride of the unsaturated dicarboxylic acid are used, more preferably, a (meth)acrylic acid is used.

The (meth)acryl shows acryl and/or methacryl. Further, the same applies to a (meth)acrylate. As the (meth) acrylic acid, preferably, an acrylic acid is used alone or a methacrylic acid is used alone.

The content ratio of the unsaturated carboxylic acid is, for example, appropriately adjusted so as to achieve a balance between the heat sealability and hydrophilicity. The content ratio of the unsaturated carboxylic acid is, from the viewpoint of the hydrophilicity, for example, 1% by mass or more, preferably 5% by mass or more, more preferably 8% by mass or more, further more preferably 10% by mass or more with respect to the total amount of the olefin raw material monomer component. In addition, the content ratio of the unsaturated carboxylic acid is, from the viewpoint of the heat sealability, for example, below 50% by mass, preferably 40% by mass or less, more preferably 30% by mass or less, further more preferably 25% by mass or less with respect to the total amount of the olefin raw material monomer component.

The content ratio of the unsaturated carboxylic acid in the olefin raw material monomer component is substantially the same as the content ratio of the constitutional unit derived from the unsaturated carboxylic acid in the unsaturated carboxylic acid modified polyolefin resin.

In other words, the content ratio of the constitutional unit derived from the unsaturated carboxylic acid is, for example, 1% by mass or more, preferably 5% by mass or more, more preferably 8% by mass or more, further more preferably 10% by mass or more with respect to the total amount of the unsaturated carboxylic acid-modified polyolefin resin. In addition, the content ratio of the constitutional unit derived from the unsaturated carboxylic acid is, for example, below 50% by mass, preferably 40% by mass or less, more preferably 30% by mass or less, further more preferably 25% by mass or less with respect to the total amount of the unsaturated carboxylic acid-modified polyolefin resin.

The olefin raw material monomer component may contain, if necessary, a copolymerizable monomer at the appropriate ratio. The copolymerizable monomer is a monomer copolymerizable with the olefin and/or the unsaturated carboxylic acid.

Examples of the copolymerizable monomer include unsaturated carboxylic acid esters, hydroxyl group-containing vinyl monomers, amino group-containing vinyl monomers, glycidyl group-containing vinyl monomers, cyano group-containing vinyl monomers, sulfonic acid group-containing vinyl monomers, acetoacetoxy group-containing vinyl monomers, phosphoric acid group-containing vinyl monomers, amide group-containing vinyl monomers, aromatic vinyl monomers, N-substituted unsaturated carboxylic amides, heterocyclic vinyl compounds, vinylidene halide compounds, dienes, and vinyl esters. These may be used alone or in combination of two or more. As the copolymerizable monomer, from the viewpoint of the heat sealability, preferably, an unsaturated carboxylic acid ester is used.

An example of the unsaturated carboxylic acid ester includes an alkyl ester of the above-described unsaturated carboxylic acid. As the unsaturated carboxylic acid ester, preferably, a (meth)acrylate is used. An example of the (meth)acrylate includes a (meth)acrylate having an alkyl moiety having 1 to 12 carbon atoms. More specifically, examples of the (meth)acrylate include methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, 2-ethylhexyl (meth)acrylate, and lauryl (meth)acrylate. These may be used alone or in combination of two or more.

As the (meth)acrylate, preferably, a (meth)acrylate having an alkyl moiety having 1 to 4 carbon atoms is used. More specifically, examples thereof include methyl (meth)acrylate, ethyl (meth)acrylate, propyl (meth)acrylate, butyl (meth)acrylate, and isobutyl (meth)acrylate.

As the (meth)acrylate, further more preferably, a (meth)acrylate having an alkyl moiety having 2 to 4 carbon atoms is used. More specifically, examples thereof include ethyl (meth)acrylate, propyl (meth)acrylate, butyl (meth) acrylate, and isobutyl (meth)acrylate. Further more preferably, examples of the (meth)acrylate include butyl acrylate and isobutyl acrylate, particularly preferably, isobutyl acrylate is used.

The content ratio of the unsaturated carboxylic acid ester is, for example, 0% by mass or more, preferably 1% by mass or more, more preferably 5% by mass or more, further more preferably 8% by mass or more, particularly preferably 10% by mass or more with respect to the total amount of the olefin raw material monomer component. Further, the content ratio of the unsaturated carboxylic acid ester is, for example, 30% by mass or less, preferably 25% by mass or less, more preferably 20% by mass or less with respect to the total amount of the olefin raw material monomer component.

The content ratio of the unsaturated carboxylic acid ester in the olefin raw material monomer component is substantially the same as the content ratio of the constitutional unit derived from the unsaturated carboxylic acid ester in the unsaturated carboxylic acid modified polyolefin resin.

In other words, the content ratio of the constitutional unit derived from the unsaturated carboxylic acid ester is, for example, 0% by mass or more, preferably 1% by mass or more, more preferably 5% by mass or more, further more preferably 8% by mass or more, particularly preferably 10% by mass or more with respect to the total amount of the unsaturated carboxylic acid modified polyolefin resin. Further, the content ratio of the constitutional unit derived from the unsaturated carboxylic acid ester is, for example, 30% by mass or less, preferably 25% by mass or less, more preferably 20% by mass or less with respect to the total amount of the unsaturated carboxylic acid-modified polyolefin resin.

As the olefin raw material monomer component, preferably, a ternary monomer component consisting of ethylene, an unsaturated carboxylic acid, and an unsaturated carboxylic acid ester is used. Further, as the olefin raw material monomer component, preferably, a binary monomer component consisting of ethylene and an unsaturated carboxylic acid is used.

In other words, as the unsaturated carboxylic acid-modified polyolefin resin, preferably, a two-component copolymer consisting of ethylene and an unsaturated carboxylic acid (hereinafter, an ethylene-unsaturated carboxylic acid copolymer) is used. Further, as the unsaturated carboxylic acid-modified polyolefin resin, preferably, a three-component copolymer consisting of ethylene, an unsaturated carboxylic acid ester, and an unsaturated carboxylic acid (hereinafter, an ethylene-unsaturated carboxylic acid ester-unsaturated carboxylic acid copolymer) is also used.

As the unsaturated carboxylic acid-modified polyolefin resin, from the viewpoint of achieving the balance between the heat sealability and the hydrophilicity, further more preferably, an ethylene-unsaturated carboxylic acid copolymer and an ethylene-unsaturated carboxylic acid ester-unsaturated carboxylic acid copolymer are used in combination. A combination ratio of the ethylene-unsaturated carboxylic acid copolymer and the ethylene-unsaturated carboxylic acid ester-unsaturated carboxylic acid copolymer is appropriately adjusted from the viewpoint of achieving the balance between the heat sealability and the hydrophilicity.

For example, the content ratio of the ethylene-unsaturated carboxylic acid copolymer is, for example, 20% by mass or more, preferably 40% by mass or more with respect to the total amount of the ethylene-unsaturated carboxylic acid copolymer and the ethylene-unsaturated carboxylic acid ester-unsaturated carboxylic acid copolymer. In addition, the content ratio of the ethylene-unsaturated carboxylic acid copolymer is, for example, 80% by mass or less, preferably 60% by mass or less with respect to the total amount of the ethylene-unsaturated carboxylic acid copolymer and the ethylene-unsaturated carboxylic acid ester-unsaturated carboxylic acid copolymer.

Further, for example, the content ratio of the ethylene-unsaturated carboxylic acid ester-unsaturated carboxylic acid copolymer is, for example, 20% by mass or more, preferably 40% by mass or more with respect to the total amount of the ethylene-unsaturated carboxylic acid copolymer and the ethylene-unsaturated carboxylic acid ester-unsaturated carboxylic acid copolymer. In addition, the content ratio of the ethylene-unsaturated carboxylic acid ester-unsaturated carboxylic acid copolymer is, for example, 80% by mass or less, preferably 60% by mass or less with respect to the total amount of the ethylene-unsaturated carboxylic acid copolymer and the ethylene-unsaturated carboxylic acid ester-unsaturated carboxylic acid copolymer.

A method for producing the unsaturated carboxylic acid-modified polyolefin resin is not particularly limited, and a known method is used. For example, the above-described olefin raw material monomer component and a known polymerization initiator (peroxide or the like) are brought into contact with each other under the conditions of high temperature and high pressure. Thus, the unsaturated carboxylic acid-modified polyolefin resin is obtained as a polymerization product of the olefin raw material monomer component.

[Anionic Group-Containing (Meth)acrylic Resin]

The anionic group-containing (meth)acrylic resin is a resin containing the anionic group and the constitutional unit derived from the (meth)acrylate. Examples of the anionic group-containing (meth)acrylic resin include anionic group-containing (meth)acrylic resins. The anionic group-containing (meth)acrylic resin is obtained by the copolymerization of the monomer component (hereinafter, an acrylic raw material monomer component) as the raw material composition.

The acrylic raw material monomer component contains, for example, the (meth)acrylate and the unsaturated carboxylic acid.

Examples of the (meth)acrylate include the above-described (meth)acrylates in the olefin raw material monomer component. These may be used alone or in combination two or more.

The content ratio of the (meth)acrylate is, for example, 50% by mass or more, preferably 60% by mass or more, more preferably 70% by mass or more with respect to the total amount of the acrylic raw material monomer component. In addition, the content ratio of the (meth)acrylate is, for example, 99% by mass or less, preferably 97% by mass or less, more preferably 95% by mass or less, further more preferably 93% by mass or less, particularly preferably 90% by mass or less with respect to the total amount of the acrylic raw material monomer component.

The content ratio of the (meth)acrylate in the acrylic raw material monomer component is substantially the same as the content ratio of the constitutional unit derived from the (meth)acrylate in the anionic group-containing (meth)acrylic resin.

In other words, the content ratio of the constitutional unit derived from the (meth)acrylate is, for example, 50% by mass or more, preferably 60% by mass or more, more preferably 70% by mass or more with respect to the total amount of the anionic group-containing (meth)acrylic resin. In addition, the content ratio of the constitutional unit derived from the (meth)acrylate is, for example, 99% by mass or less, preferably 97% by mass or less, more preferably 95% by mass or less, further more preferably 93% by mass or less, particularly preferably 90% by mass or less with respect to the total amount of the anionic group-containing (meth)acrylic resin.

Examples of the unsaturated carboxylic acid include the above-described unsaturated carboxylic acids in the olefin raw material monomer component. These may be used alone or in combination of two or more.

The content ratio of the unsaturated carboxylic acid is, for example, appropriately adjusted so as to achieve the balance between the heat sealability and the hydrophilicity. For example, the content ratio of the unsaturated carboxylic acid is, from the viewpoint of the hydrophilicity, for example, 1% by mass or more, preferably 5% by mass or more, more preferably 8% by mass or more, further more preferably 10% by mass or more with respect to the total amount of the acrylic raw material monomer component. In addition, the content ratio of the unsaturated carboxylic acid is, from the viewpoint of the heat sealability, for example, below 50% by mass, preferably 40% by mass or less, more preferably 30% by mass or less, further more preferably 25% by mass or less with respect to the total amount of the acrylic raw material monomer component.

The content ratio of the unsaturated carboxylic acid in the acrylic raw material monomer component is substantially the same as the content ratio of the constitutional unit derived from the unsaturated carboxylic acid in the anionic group-containing (meth)acrylic resin.

In other words, the content ratio of the constitutional unit derived from the unsaturated carboxylic acid is, for example, 1% by mass or more, preferably 5% by mass or more, more preferably 8% by mass or more, further more preferably 10% by mass or more with respect to the total amount of the anionic group-containing (meth)acrylic resin. In addition, the content ratio of the constitutional unit derived from the unsaturated carboxylic acid is, for example, below 50% by mass, preferably 40% by mass or less, more preferably 30% by mass or less, further more preferably 25% by mass or less with respect to the total amount of the anionic group-containing (meth)acrylic resin.

The acrylic raw material monomer component may contain, if necessary, the copolymerizable monomer at the appropriate ratio. The copolymerizable monomer is a monomer copolymerizable with the (meth)acrylate and/or the unsaturated carboxylic acid.

Examples of the copolymerizable monomer include olefins, hydroxyl group-containing vinyl monomers, amino group-containing vinyl monomers, glycidyl group-containing vinyl monomers, cyano group-containing vinyl monomers, sulfonic acid group-containing vinyl monomers, acetoacetoxy group-containing vinyl monomers, phosphoric acid group-containing vinyl monomers, amide group-containing vinyl monomers, aromatic vinyl monomers, N-substituted unsaturated carboxylic acid amides, heterocyclic vinyl compounds, vinylidene halide compounds, dienes, and vinyl esters. These may be used alone or in combination of two or more. The content ratio of the copolymerizable monomer is appropriately set in accordance with its purpose and application.

When the acrylic raw material monomer component contains the olefin, in the anionic group-containing (meth) acrylic resin, the content ratio of the constitutional unit derived from the olefin is below 50% by mass, preferably 40% by mass or less with respect to the total amount of the anionic group-containing (meth)acrylic resin. The anionic group-containing (meth)acrylic resin is distinguished from the above-described anionic group-containing polyolefin resin by the content ratio of the constitutional unit derived from the olefin.

A method for producing the unsaturated carboxylic acid-modified (meth)acrylic resin is not particularly limited, and a known method is used. For example, the above-described acrylic raw material monomer component and a known polymerization initiator (peroxide or the like) are brought into contact with each other under the conditions of high temperature and high pressure. Thus, the anionic group-containing (meth)acrylic resin is obtained as the polymerization product of the acrylic raw material monomer component.

[Anionic Group-Containing Polyurethane Resin]

The anionic group-containing polyurethane resin is a resin containing the anionic group and a urethane group. An example of the anionic group-containing polyurethane resin includes a reaction product of the above-described polyisocyanate compound, the above-described polyol compound, the above-described active hydrogen compound containing the anionic group, and the above-described chain extender.

A method for producing an anionic group-containing polyurethane resin is not particularly limited. For example, the polyisocyanate compound, the polyol compound, and the active hydrogen compound containing an anionic group are reacted by the above-described method, thereby obtaining the isocyanate group-terminated prepolymer. Next, the isocyanate group-terminated prepolymer and the chain extender are reacted by the above-described method. Thus, the anionic group-containing polyurethane resin is obtained.

These anionic group-containing heat sealable resins may be used alone or in combination of two or more. As the anionic group-containing heat sealable resin, preferably, an anionic group-containing polyolefin resin is used.

The anionic group-containing heat sealable resin is preferably neutralized with a neutralizing agent. In other words, as the anionic group-containing heat sealable resin, preferably, an anionic group-containing heat sealable resin neutralized with the neutralizing agent is used. The method for neutralizing the anionic group-containing heat sealable resin is not particularly limited, and the anionic group and the neutralizing agent are brought into contact with each other at arbitrary timing.

Examples of the neutralizing agent include basic compounds, and more specifically, examples thereof include inorganic basic compounds and organic basic compounds. Examples of the inorganic basic compound include hydroxides of alkali metals. Examples of the hydroxide of the alkali metal include sodium hydroxide and potassium hydroxide. Examples of the organic basic compound include ammonia and amine compounds. Examples of the amine compound include triethylamine (TEA), triethanolamine, dimethylethanolamine, diethanolamine, diethylamine (DEA), methylamine (MA), and N, N-dimethylethanolamine. These may be used alone or in combination of two or more. From the viewpoint of adjusting a moisture absorption rate and a hygroscopic expansion ratio of the anionic group-containing heat sealable resin, and obtaining excellent water vapor barrier properties, as the neutralizing agent, preferably, hydroxides of alkali metals, ammonia, and amine compounds are used. In other words, the neutralizing agent preferably contains at least one selected from the group consisting of hydroxides of alkali metals, ammonia, and amine compounds. From the viewpoint of adjusting the moisture absorption rate and the hygroscopic expansion ratio of the anionic group-containing heat sealable resin and obtaining the excellent water vapor barrier properties, as the neutralizing agent, more preferably, a neutralizing agent containing no metal is used, further more preferably, ammonia and an amine compound are used, even more preferably, ammonia and diethylamine (DEA) are used, particularly preferably ammonia is used.

An addition amount of the neutralizing agent is, for example, 0.4 equivalents or more, preferably 0.6 equivalents or more with respect to one equivalent of the anionic group. Further, the addition amount of the neutralizing agent is, for example, 1.2 equivalents or less, preferably 1.0 equivalent or less with respect to one equivalent of the anionic group.

When the amount of the heat seal layer 5 is within a range to be described later, from the viewpoint of obtaining the further more excellent water vapor barrier properties, the hygroscopic expansion ratio of the anionic group-containing heat sealable resin is, for example, 1000 ppm/RH% or more, preferably 3000 ppm/RH% or more, more preferably 5000 ppm/RH% or more, further more preferably 6000 ppm/RH% or more. In addition, when the amount of the heat seal layer 5 is within the range to be described later, from the viewpoint of obtaining the further more excellent water vapor barrier properties, the hygroscopic expansion ratio of the anionic group-containing heat sealable resin is, for example, 20000 ppm/RH% or less, preferably 15000 ppm/RH% or less, more preferably 10000 ppm/RH% or less, further more preferably 9000 ppm/RH% or less. In other words, the hygroscopic expansion ratio of the anionic group-containing heat sealable resin is, for example, 1000 ppm/RH% or more and 20000 ppm/RH% or less, preferably 3000 ppm/RH% or more and 15000 ppm/RH% or less, more preferably 5000 ppm/RH% or more and 10000 ppm/RH% or less, further more preferably 6000 ppm/RH% or more and 9000 ppm/RH% or less. In a case where the amount of the heat seal layer 5 is within the range to be described later, when the hygroscopic expansion ratio of the anionic group-containing heat sealable resin is within the above-described range, it is possible to obtain the particularly excellent water vapor barrier properties. The hygroscopic expansion ratio is measured under the following conditions in conformity with Examples to be described later.

Sample size: 23 mm$\times$ 5 mm$\times$ 200 $\mu$m

Distance between chucks: 20 mm
Measurement method: tensile load method
Load: 30 g
Temperature: 20°C
Measurement humidity range: 40 to 80 RH%
Humidification conditions: the humidity is increased stepwise. The humidities of each step are 20 RH%, 40 RH%, 60 RH%, 70 RH% and 80 RH%. In addition, in each of the humidities (20 RH%, 40 RH%, 60 RH%, 70 RH%, 80 RH%), the sample is held for 300 minutes.
Detection method: total expansion method
Chuck mass: 2 g

The above-described anionic group-containing heat sealable resin is, for example, prepared as the solution and/or the dispersion liquid dissolved and/or dispersed in the solvent. For example, the anionic group-containing heat sealable resin is synthesized in the solvent. Thus, the solution and/or the dispersion liquid of the anionic group-containing heat sealable resin is obtained.

The solvent is not particularly limited, and examples thereof include water, methanol, ethanol, propanol, isopropanol, acetone, methyl ethyl ketone, ethyl acetate, tetrahydrofuran, and acetonitrile. These solvents may be used alone or in combination of two or more. The solid content concentration of the filling coating material is not particularly limited, and is appropriately set in accordance with its purpose and application.

More specifically, examples of the heat sealable coating material include a polyolefin dispersion containing the anionic group-containing polyolefin resin, an acrylic emulsion containing the anionic group-containing (meth)acrylic resin, and a polyurethane dispersion containing the anionic group-containing polyurethane resin. As the heat sealable coating material, preferably, a polyolefin dispersion containing the anionic group-containing polyolefin resin is used.

The heat sealable coating material may also contain the additive. In other words, the heat sealable coating material may contain the above-described heat sealable resin and the additive. Examples of the additive include heat-resistant stabilizers, antioxidants, light-resistant stabilizers, ultraviolet absorbers, plasticizers, antistatic agents, lubricants, anti-blocking agents, pigments, dyes, crystal nucleating agents, and curing agents. These may be used alone or in combination of two or more. The addition amount and the timing of addition of the additive are appropriately set in accordance with its purpose and application.

The solid content concentration of the heat sealable coating material is, for example, 10% by mass or more, preferably 15% by mass or more, more preferably 20% by mass or more. Further, the solid content concentration of the heat sealable coating material is, for example, 60% by mass or less, preferably 50% by mass or less, more preferably 40% by mass or less.

The method for coating the heat sealable coating material is not particularly limited. Examples of the coating method include dip coating methods, gravure coating methods, reverse coating methods, roll coating methods, bar coating methods, spray coating methods, and air knife coating methods. The drying conditions of the gas barrier coating material are not particularly limited. For example, the drying temperature is, for example, 40°C or more, preferably 50°C or more. Further, the drying temperature is, for example, 200°C or less, preferably 180°C or less. Further, the drying time is, for example, one second or more, preferably 30 seconds or more. Further, the drying time is, for example, 10 minutes or less, preferably five minutes or less.

Thus, the heat seal layer 5 is formed. The amount (dry mass) of the heat seal layer 5 is set from the viewpoint of achieving both the gas barrier properties and the heat sealability.

More specifically, from the viewpoint of the heat sealability, the amount (dry mass) of the heat seal layer 5 is, for example, 1.0 $g/m^2$ or more, preferably above 1.0 $g/m^2$, more preferably 1.1 $g/m^2$ or more, further more preferably 1.5 $g/m^2$ or more, particularly preferably 1.8 $g/m^2$ or more. Further, from the viewpoint of the gas barrier properties, the amount (dry mass) of the heat seal layer 5 is, for example, 7.0 $g/m^2$ or less, preferably below 5.0 $g/m^2$, more preferably 4.9 $g/m^2$ or less, further more preferably 4.0 $g/m^2$ or less, particularly preferably 3.5 $g/m^2$ or less.

(5) Laminate

The total thickness of the laminate 1 is, for example, 5 $\mu$m or more, preferably 10 $\mu$m or more. Also, the total thickness of the laminate 1 is, for example, 1 mm or less, preferably, 0.5 mm or less.

2. Function and Effect

The above-described laminate 1 includes the paper substrate 2, the gas barrier layer 4, and the heat seal layer 5, and the amount of the heat seal layer 5 is adjusted to the above-described predetermined range. Therefore, the above-described laminate 1 includes both the excellent gas barrier properties (oxygen barrier properties and water vapor barrier properties) and the excellent heat sealability.

More specifically, the heat seal layer 5 adsorbs oxygen and water vapor. Thus, for example, as described in Patent Document 1, when the heat seal layer 5 of 10 g/m$^2$ is formed on the surface of the gas barrier layer 4, the gas barrier properties of the gas barrier layer 4 may be lowered.

In particular, when the paper substrate 2 is used as the substrate instead of the resin substrate, the gas barrier properties as the entire laminate 1 depend on the gas barrier properties of the gas barrier layer 4.

Therefore, when the gas barrier properties of the gas barrier layer 4 are lowered by the heat seal layer 5, the gas barrier properties as the entire laminate 1 may be insufficient.

On the other hand, it is considered that a lamination amount of the heat seal layer 5 is decreased, and an absorption amount of the oxygen and the water vapor is decreased so as to suppress a decrease of the gas barrier properties of the gas barrier layer 4.

However, when the lamination amount of the heat seal layer 5 is decreased, there is a problem that the sufficient heat sealability (adhesive strength) cannot be obtained.

Therefore, in the above-described laminate 1, the amount (dry mass) of the heat seal layer 5 is set within a particularly narrow range from the viewpoint of achieving both the gas barrier properties and the heat sealability. That is, in the above-described laminate 1, the amount of the heat seal layer 5 is adjusted within the above-described predetermined range.

Therefore, in the above-described laminate 1, it is possible to suppress the decrease of the gas barrier properties by the heat seal layer 5, and obtain the excellent heat sealability. As a result, the above-described laminate 1 has both the excellent gas barrier properties and the excellent heat sealability.

3. Application

The above-described laminate 1 is preferably used in various industrial fields requiring the gas barrier properties and the heat sealability. More specifically, the laminate 1 is preferably used as a packaging material. In other words, the packaging material preferably includes the above-described laminate 1, and more preferably consists of the above-described laminate 1.

Since such a packaging material includes the above-described laminate 1, it has both the excellent gas barrier properties and the excellent heat sealability. Such a packaging material is used in various industrial fields. Preferably, the above-described packaging material is used in the food packaging material field.

4. Modified Examples

In the laminate 1 and the packaging material described above, the filling layer 3 is interposed between the paper substrate 2 and the gas barrier layer 4. However, the filling layer 3 may not be interposed between the paper substrate 2 and the gas barrier layer 4. For example, the filling layer 3 may be also omitted in accordance with the kind of the paper substrate 2 and the kind of the gas barrier layer 4.

Further, as described above, the heat seal layer 5 may be also directly laminated on the gas barrier layer 4. Further, the heat seal layer 5 may be also bonded to the gas barrier layer 4 by a known adhesive. That is, an adhesive layer (not shown) may be also interposed between the gas barrier layer 4 and the heat seal layer 5.

Examples

Next, the present invention is further described based on Examples and Comparative Examples. The present invention is however not limited by these Examples and Comparative Examples below. All designations of "part" or "parts" and "%" mean part or parts by mass and % by mass, respectively, unless otherwise particularly specified. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described

"DESCRIPTION OF EMBODIMENTS".

1. Paper Substrate

Preparation Example 1

As the paper substrate, a single glazed (bleached) kraft paper (trade name: "Hakugin", manufactured by NIPPON PAPER INDUSTRIES CO., LTD., basis weight of 67 g/m$^2$) was prepared.

2. Filling Coating Material

Preparation Example 1 (Acrylic Emulsion)

A reaction vessel equipped with a stirrer, a reflux condenser, a dropping device, and a thermometer was charged with 2193 parts by mass of ion-exchanged water (solvent) and 2.5 parts by mass of sodium dodecyl sulfate (surfactant). The contents of the reaction vessel were heated with stirring and nitrogen substitution until the temperature thereof reached 75°C.

While keeping the internal temperature of the reaction vessel at 75°C, 7.5 parts by mass of potassium persulfate (polymerization initiator) was added to the reaction vessel and dissolved in the contents of the reaction vessel. Thereafter, a monomer emulsion product which was prepared in advance was continuously added dropwise to the reaction vessel over a period of five hours.

The monomer emulsion product was a raw material composition containing the following components:

Ion-exchanged water (solvent): 900 parts by mass
Sodium dodecyl sulfate (surfactant): 5 parts by mass
Acrylamide (raw material monomer): 25 parts by mass
Methyl methacrylate (raw material monomer): 175 parts by mass
2-ethylhexyl acrylate (raw material monomer): 1088 parts by mass
Methacrylic acid (raw material monomer): 80 parts by mass
Styrene (raw material monomer): 1133 parts by mass

After the dropping of the monomer emulsion product was completed, the contents of the reaction vessel were aged for three hours. Thus, the raw material monomer was polymerized, thereby obtaining the (meth)acrylic resin. Further, the acrylic emulsion in which the (meth)acrylic resin was water-dispersed was obtained.

The acrylic emulsion was cooled to the room temperature. Thereafter, the ion-exchanged water and ammonia water (neutralizing agent) were added to the acrylic emulsion to adjust the solid content concentration to 41% by mass, and a pH thereof was adjusted to 8.0.

Thus, the acrylic emulsion obtained by water-dispersing the (meth)acrylic resin was obtained. An average particle size of the acrylic emulsion was 140 nm. The average particle size was measured with a dynamic light scattering method (measurement device: "FPAR-1000", manufactured by Otsuka Electronics Co., Ltd.) (hereinafter, the same applies).

Thereafter, the water was furthermore added to the above-described acrylic emulsion (solid content concentration of 41% by mass) to be mixed with a mixer for five minutes. Thus, the filling coating material (solid content concentration of 40% by mass) was prepared.

2. Gas Barrier Coating Material

Preparation Example 2 (Polyurethane Dispersion)

(1) Primary PUD

The following components were mixed and reacted at 65 to 70°C in a nitrogen atmosphere until the isocyanate group concentration (NCO%) was 6.11% by mass or less. Thus, a transparent isocyanate group-terminated prepolymer reaction product liquid was obtained.

1,3-xylylene diisocyanate
(TAKENATE500, 1,3-XDI, manufactured by Mitsui Chemicals, Inc.): 143.2 parts by mass methylenebis(cyclohexylisocyanate)
(VestanatH$_{12}$MDI, H$_{12}$MDI, manufactured by Evonik Industries AG): 25.0 parts by mass ethylene glycol: 29.2 parts by mass
trimethylolpropane: 2.7 parts by mass
dimethylolpropionic acid: 14.8 parts by mass
methyl ethyl ketone (solvent): 121.6 parts by mass

Next, the reaction product liquid was cooled to 40°C. Next, 11.0 parts by mass of triethylamine (TEA) was added to the reaction product liquid. Thus, the isocyanate group-terminated prepolymer was neutralized.

Next, a homodisper was used, and the reaction product liquid was dispersed in 838.0 parts by mass of ion-exchanged water. Next, an amine aqueous solution was added to the obtained dispersion liquid, and subjected to the chain extension reaction. In addition, the reaction product liquid of the chain extension reaction was aged for one hour. Thus, the gas barrier polyurethane resin was obtained. The amine aqueous solution was a liquid mixture of 48.4 parts by mass of ion-exchanged water and 24.2 parts by mass of 2-((2-aminoethyl)amino)ethanol. Thereafter, an evaporator was used, and the methyl ethyl ketone and the ion-exchanged water were distilled off from the reaction product liquid. Thus, the solid content concentration was adjusted to 30% by mass.

As described above, the primary polyurethane dispersion (primary PUD) obtained by water-dispersing the gas barrier polyurethane resin was obtained.

The pH of the primary polyurethane dispersion (primary PUD) was 8.6. In addition, the average particle size of the polyurethane dispersion (primary PUD) was 58 nm.

(2) Secondary PUD

Water (20.2 parts by mass), 28.9 parts by mass of dispersion liquid of a swellable layered inorganic compound (trade name: "ME-300-B4T", synthetic mica, manufactured by Katakura& Co-op Agri Corporation, solid content concentration of 7.8%), and 0.5 parts by mass of 25% ammonia water (thickening inhibitor) were blended to be mixed with a mixer for five minutes. Thus, the dispersion liquid of the additive was obtained.

Next, the above-described dispersion liquid of the additive (total amount of 49.6 parts by mass) and 51.0 parts by mass of the primary PUD were mixed with the mixer for five minutes. Thus, a secondary polyurethane dispersion (secondary PUD) obtained by water-dispersing the gas barrier polyurethane resin and the additive was obtained. The solid content concentration of the second PUD was 15% by mass. The secondary PUD was used as the gas barrier coating material.

4. Heat Sealable Coating Material

(1) Anionic Group-Containing Heat Sealable Resin

Production Example 1 (Polyolefin Dispersion, Potassium Hydroxide Neutralized Compound)

The ethylene-acrylic acid copolymer (50 parts by mass) and 50 parts by mass of ethylene-isobutyl acrylate-methacrylic acid copolymer were melted and kneaded. Thus, a resin composition (anionic group-containing polyolefin resin) as the anionic group-containing heat sealable resin was obtained.

The content ratio of the constitutional unit derived from the ethylene was 79.5% by mass, and the content ratio of the constitutional unit derived from the acrylic acid was 20.5% by mass with respect to the total amount of the ethylene-acrylic acid copolymer.

Further, the content ratio of the constitutional unit derived from the ethylene was 80.0% by mass, the content ratio of the constitutional unit derived from the isobutyl acrylate was 10.0% by mass, and the content ratio of the constitutional unit derived from the methacrylic acid was 10.0% by mass with respect to the total amount of the ethylene-isobutyl acrylate-methacrylic acid copolymer.

The above-described resin composition, 4.0 parts by mass of potassium hydroxide (neutralizing agent), and 140 parts by mass of deionized water were put into the reaction vessel to be stirred. The temperature of the contents of the reaction vessel was increased to 150°C, and the temperature was kept for four hours. Thus, the resin composition was neutralized by the potassium hydroxide (neutralizing agent). In other words, the resin composition (anionic group-containing heat sealable resin) neutralized with the neutralizing agent was obtained. Thereafter, the contents of the reaction vessel were cooled to the room temperature.

Thus, an aqueous dispersion (aqueous dispersion 1) of the resin composition (resin 1) was obtained. The aqueous dispersion 1 was the polyolefin dispersion. The solid content concentration of the aqueous dispersion 1 was 42% by mass. Further, the average particle size of the aqueous dispersion 1 was 0.5 $\mu$m. The aqueous dispersion 1 was used as the heat sealable coating material.

Production Example 2 (Polyolefin Dispersion, Sodium Hydroxide Neutralized Compound)

The sodium hydroxide (2.5 parts by mass) was used instead of 4.0 parts by mass of potassium hydroxide. The aqueous dispersion (aqueous dispersion 2) of the resin composition (resin 2) was obtained in the same manner as Production Example 1 except for that. The solid content concentration of the aqueous dispersion 2 was 42% by mass.

Further, the average particle size of the aqueous dispersion 2 was 0.6 μm. The aqueous dispersion 2 was used as the heat sealable coating material.

Production Example 3 (Polyolefin Dispersion, Ammonia Neutralized Compound)

The ammonia water (25% by mass) (13.7 parts by mass) was used instead of 4.0 parts by mass of potassium hydroxide. Further, a used amount of the deionized water was changed to 285 parts by mass. The aqueous dispersion (aqueous dispersion 3) of the resin composition (resin 3) was obtained in the same manner as Production Example 1 except for that. The solid content concentration of the aqueous dispersion 3 was 25% by mass. Further, the average particle size of the aqueous dispersion 3 was 0.6 μm. The aqueous dispersion 3 was used as the heat sealable coating material.

Production Example 4 (Polyolefin Dispersion), Amine Neutralized Compound

The diethylamine (DEA) (11.7 parts by mass) was used instead of 4.0 parts by mass of potassium hydroxide. Further, the used amount of the deionized water was changed to 285 parts by mass. The aqueous dispersion (aqueous dispersion 4) of the resin composition (resin 4) was obtained in the same manner as Production Example 1 except for that. The solid content concentration of the aqueous dispersion 4 was 25% by mass. Further, the average particle size of the aqueous dispersion 4 was 0.5 μm. The aqueous dispersion 4 was used as the heat sealable coating material.

Production Example 5 (Polyolefin Dispersion), Amine Neutralized Compound

The methylamine (MA) (5.0 parts by mass) was used instead of 4.0 parts by mass of potassium hydroxide. Further, the used amount of the deionized water was changed to 285 parts by mass. The aqueous dispersion (aqueous dispersion 5) of the resin composition (resin 5) was obtained in the same manner as Production Example 1 except for that. The solid content concentration of the aqueous dispersion 5 was 25% by mass. Further, the average particle size of the aqueous dispersion 5 was 0.6 μm. The aqueous dispersion 5 was used as the heat sealable coating material.

(2) Hygroscopic Expansion Ratio

The hygroscopic expansion ratio of each of the resin compositions of Production Examples 1 to 5 (that is, the anionic group-containing heat sealable resin neutralized with the neutralizing agent) was measured by the following method.

More specifically, each of the heat sealable coating materials of Production Examples 1 to 5 was poured into a tray consisting of polypropylene, dried overnight at the room temperature, and dried at 100°C for 10 minutes, thereby obtaining a film. The amount of the heat sealable coating material was adjusted so as to obtain the film having the thickness of 200 μm.

Next, the film having the thickness of 200 μm was cut into a size of 20 mm × 5 mm, thereby obtaining a sample (20 mm × 5 mm × 200 μm). Then, the hygroscopic expansion ratio of the sample was measured using a hygroscopic expansion ratio measurement device (manufactured by NETZSCH-Geratebau GmbH, HC-TMA4000SE, HC9700) under the following conditions. The hygroscopic expansion ratio was measured in the range of 40 to 80 RH%. The resin composition of Production Example 1 was broken before the humidity conditions reached 80 RH%. Therefore, the hygroscopic expansion ratio of the resin composition of Production Example 1 was measured in the range of 40 to 70 RH%.

$$\text{Sample size: } 23 \text{ mm} \times 5 \text{ mm} \times 200 \text{ μm}$$

Distance between chucks: 20 mm
Measurement method: tensile load method
Load: 30 g
Temperature: 20°C
Measurement humidity range: 40 to 80 RH%
Humidification conditions: the humidity was increased stepwise. The humidity of each step was 20 RH%, 40 RH%, 60 RH%, 70 RH% and 80 RH%. In addition, in each humidity (20 RH%, 40 RH%, 60 RH%, 70 RH%, 80 RH%), the sample was held for 300 minutes.
Detection method: total expansion method
Chuck mass: 2 g

The kind of the anionic group-containing heat sealable resin and the hygroscopic expansion ratio are shown in Tables 1 to 2.

5. Laminate

Examples 1 to 12 and Comparative Examples 1 to 4 (Laminate)

The filling coating material (Preparation Example 1) was coated onto a glazed surface (single glazed kraft paper) of the paper substrate with a bar coater. A coating amount was adjusted so that the dry mass was 10 g/m². Next, the coating film of the filling coating material was dried at 120°C for 60 seconds. Thus, the filling layer was formed.

Next, the gas barrier coating material (Preparation Example 2) was coated onto the surface of the filling layer with the bar coater. The coating amount was adjusted so that the dry mass was 3 g/m². Next, the coating film of the gas barrier coating material was dried at 120°C for 60 seconds. Thus, the gas barrier layer was formed on the surface of the filling layer.

Thereafter, the heat sealable coating material described in Tables 1 to 2 was coated onto the surface of the gas barrier layer with the bar coater. The coating amount was adjusted so that the dry mass was the value (g/m²) described in Tables 1 to 2. Next, the coating film of the heat sealable coating material was dried at 120°C for 60 seconds. Thus, the heat seal layer was formed on the surface of the gas barrier layer. A layer structure of the laminate was as follow.

Paper substrate/ filling layer/ gas barrier layer/ heat seal layer

The dry mass of the filling layer was calculated by subtracting the mass of the paper substrate from the total mass of the laminate including the paper substrate and the filling layer (two layers).

Further, the dry mass of the gas barrier layer was calculated by subtracting the total mass of the laminate consisting of the paper substrate and the filling layer (two layers) from the total mass of the laminate consisting of the paper substrate, the filling layer, and the gas barrier layer (three layers).

Further, the dry mass of the heat seal layer was calculated by subtracting the total mass of the laminate consisting of the paper substrate, the filling layer, and the gas barrier layer (three layers) from the total mass of the laminate consisting of the paper substrate, the filling layer, the gas barrier layer, and the heat seal layer (four layers).

6. Evaluation

(1) Oxygen Permeability Amount (OTR) of Laminate

An oxygen permeability amount (cc/m²·day·atm) of the laminate was measured using the oxygen permeability analyzer (manufactured by AMTEK MOCON, OX-TRAN 2/22H). The measurement conditions (temperature (°C) and relative humidity (RH%)) are shown in Tables 1 to 2.

(2) Water Vapor Permeability Amount (WVTR) of Laminate

The water vapor permeability amount (g/m²·day) of the laminate was measured using a water vapor permeability analyzer (manufactured by AMTEK MOCON, PARMATRAN-W 3/34 G). The measurement conditions (temperature (°C) and relative humidity (RH%)) are shown in Tables 1 to 2.

(3) Heat Seal Strength

The two laminates were prepared. Then, the heat seal layers of the two laminates were brought into contact with each other to be heat-sealed under the conditions of 140°C, one second, and 2 kg/cm². Then, the heat seal strength (kg/15 mm) was measured with a tensile device manufactured by INTESCO co., ltd. (model number: 201X). The results are shown in Tables 1 to 2.

[Table 1]

Table 1

| No. | | | Ex. 1 | Ex. 2 | Ex. 3 | Ex. 4 | Comparative Ex. 1 | Comparative Ex. 4 |
|---|---|---|---|---|---|---|---|---|
| Laminate | Substrate | Kind | Single Glazed Kraft Paper | | | | | |
| | Filling Layer | Kind | Preparation Ex. 2 | Preparation Ex. 2 | Preparation Ex. 2 | Preparation Ex. 2 | Preparation Ex. 2 | Preparation Ex. 2 |
| | | Amount (g/m$^2$) | 10 | 10 | 10 | 10 | 10 | 10 |
| | Gas Barrier Layer | Kind | Preparation Ex. 1 | Preparation Ex. 1 | Preparation Ex. 1 | Preparation Ex. 1 | Preparation Ex. 1 | Preparation Ex. 1 |
| | | Amount (g/m$^2$) | 3 | 3 | 3 | 3 | 3 | 3 |
| | Heat Seal Layer | Kind | Production Ex. 1 | Production Ex. 1 | Production Ex. 1 | Production Ex. 1 | Production Ex. 1 | Production Ex. 1 |
| | | Amount (g/m$^2$) | 1.8 | 3.2 | 4.5 | 6.1 | 8.2 | 0.5 |
| | | Neutralizing Agent | KOH | KOH | KOH | KOH | KOH | KOH |
| | | Hygroscopic Expansion Ratio (ppm/RH%) | 16530 | 16530 | 16530 | 16530 | 16530 | 16530 |
| Evaluation | Oxygen Permeability amount (cc/m$^2$·day·atm) | 20°C80RH% | 0.4 | 0.7 | 1.4 | 1.8 | 40.0 | 0.3 |
| | | 25°C60RH% | 0.5 | 0.8 | 2.2 | 2.5 | 53.1 | 0.5 |
| | | 30°C85RH% | 0.8 | 1.4 | 2.3 | 2.7 | 66.4 | 0.6 |
| | | 40°C90RH% | 7.9 | 7.6 | 7.0 | 8.1 | 89.0 | 5.1 |
| | Water Vapor Permeability Amount (g/m$^2$·day) | 20°C80RH% | 0.8 | 1.5 | 2.4 | 3.0 | 4.4 | 0.6 |
| | | 25°C60RH% | 0.6 | 0.8 | 1.1 | 1.5 | 3.4 | 0.6 |
| | | 30°C85RH% | 1.3 | 1.6 | 2.7 | 3.2 | 7.7 | 0.8 |
| | | 40°C90RH% | 5.1 | 5.9 | 7.0 | 7.8 | 24.3 | 5.0 |
| | Heat Seal Strength | kg/15mm | 2.0 | 2.0 | 2.0 | 2.0 | 1.6 | 0.3 |

EP 4 691 770 A1

[Table 2]

Table 2

| No. | | | Ex. 5 | Ex. 6 | Ex. 7 | Comparative Ex. 2 | Ex. 8 | Ex. 9 | Ex. 10 | Comparative Ex. 3 | Ex. 11 | Ex. 12 |
|---|---|---|---|---|---|---|---|---|---|---|---|---|
| Laminate | Substrate | Kind | Single Glazed Kraft Paper | | | | | | | | | |
| | Filling Layer | Kind | Preparation Ex. 2 | Preparation Ex. 2 | Preparation Ex. 2 | Preparation Ex. 2 | Preparation Ex. 2 | Preparation Ex. 2 | Preparation Ex. 2 | Preparation Ex. 2 | Preparation Ex. 2 | Preparation Ex. 2 |
| | | Amount (g/m²) | 10 | 10 | 10 | 10 | 10 | 10 | 10 | 10 | 10 | 10 |
| | Gas Barrier Layer | Kind | Preparation Ex. 1 | Preparation Ex. 1 | Preparation Ex. 1 | Preparation Ex. 1 | Preparation Ex. 1 | Preparation Ex. 1 | Preparation Ex. 1 | Preparation Ex. 1 | Preparation Ex. 1 | Preparation Ex. 1 |
| | | Amount (g/m²) | 3 | 3 | 3 | 3 | 3 | 3 | 3 | 3 | 3 | 3 |
| | Heat Seal Layer | Kind | Production Ex. 2 | Production Ex. 2 | Production Ex. 2 | Production Ex. 2 | Production Ex. 3 | Production Ex. 3 | Production Ex. 3 | Production Ex. 3 | Production Ex. 4 | Production Ex. 5 |
| | | Amount (g/m²) | 1.9 | 3.1 | 5.8 | 9.1 | 1.9 | 3.2 | 6.0 | 9.2 | 1.9 | 1.9 |
| | | Neutralizing Agent | NaOH | NaOH | NaOH | NaOH | NH₃ | NH₃ | NH₃ | NH₃ | DEA | MA |
| | | Hygroscopic Expansion Ratio (ppm/RH%) | 14370 | 14370 | 14370 | 14370 | 6340 | 6340 | 6340 | 6340 | 8600 | 3480 |
| Evaluation | Oxygen Permeability amount (cc/m²·day·atm) | 20°C80RH% | 0.6 | 0.7 | 0.8 | 15.0 | 0.3 | 0.6 | 1.4 | 41.0 | 0.4 | 0.5 |
| | | 25°C60RH% | 0.8 | 1.1 | 1.0 | 46.0 | 0.4 | 0.9 | 1.9 | 49.5 | 0.5 | 0.7 |
| | | 30°C85RH% | 1.1 | 1.1 | 1.2 | 56.0 | 0.6 | 1.1 | 2.1 | 65.3 | 0.7 | 0.8 |
| | | 40°C90RH% | 6.2 | 7.6 | 12.7 | 91.0 | 5.8 | 5.9 | 7.5 | 87.4 | 6.4 | 6.8 |
| | Water Vapor Permeability Amount (g/m²·day) | 20°C80RH% | 1.5 | 0.9 | 3.2 | 5.1 | 0.5 | 0.7 | 2.8 | 4.1 | 0.5 | 0.6 |
| | | 25°C60RH% | 1.2 | 0.7 | 2.2 | 6.3 | 0.6 | 0.8 | 1.4 | 4.5 | 0.6 | 0.5 |
| | | 30°C85RH% | 2.3 | 1.9 | 4.8 | 8.1 | 1.1 | 1.5 | 3.1 | 7.9 | 1.1 | 1.2 |
| | | 40°C90RH% | 5.7 | 6.3 | 13.8 | 32.3 | 4.5 | 5.8 | 6.8 | 23.8 | 4.5 | 5.3 |
| | Heat Seal Strength | kg/15mm | 1.9 | 2.1 | 1.5 | 1.6 | 2.0 | 2.1 | 2.0 | 1.8 | 2.0 | 2.0 |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

INDUSTRIAL APPLICATION

The laminate and the packaging material of the present invention are preferably used in the food packaging material field.

Description of Reference Numerals

1    Laminate
2    Substrate
3    Filling layer
4    Gas barrier layer
5    Heat seal layer

**Claims**

1. A laminate comprising:

   a paper substrate,
   a gas barrier layer disposed on at least one side of the paper substrate, and
   a heat seal layer disposed on at least one side of the gas barrier layer, wherein
   an amount of the heat seal layer is 1.0 g/m$^2$ or more and 7.0 g/m$^2$ or less.

2. The laminate according to claim 1, wherein
   a filling layer is interposed between the paper substrate and the gas barrier layer.

3. The laminate according to claim 1, wherein
   the gas barrier layer contains a gas barrier resin.

4. The laminate according to claim 3, wherein
   the gas barrier resin contains a gas barrier polyurethane resin.

5. The laminate according to claim 4, wherein

   the gas barrier polyurethane resin contains
   a reaction product of an isocyanate group-terminated prepolymer and a chain extender,
   the isocyanate group-terminated prepolymer contains a reaction product of a polyisocyanate component and an active hydrogen group-containing component,
   the polyisocyanate component contains xylylene diisocyanate and/or hydrogenated xylylene diisocyanate,
   the active hydrogen group-containing component contains a short-chain diol having 2 to 6 carbon atoms and an active hydrogen compound containing an anionic group.

6. The laminate according to claim 1, wherein

   the heat seal layer contains an anionic group-containing heat sealable resin, and
   the anionic group-containing heat sealable resin contains
   at least one selected from the group consisting of an anionic group-containing polyolefin resin, an anionic group-containing (meth)acrylic resin, and an anionic group-containing polyurethane resin.

7. The laminate according to claim 6, wherein

   the anionic group-containing heat sealable resin is neutralized by a neutralizing agent, and
   the neutralizing agent contains at least one selected from the group consisting of a hydroxide of an alkali metal, an ammonia, and an amine compound.

8. The laminate according to claim 6, wherein
a hygroscopic expansion ratio of the anionic group-containing heat sealable resin is 5000 ppm/RH% or more and 10000 ppm/RH% or less.

9. A packaging material comprising the laminate according to claim 1.

FIG. 1

5
4
3
2

<u>1</u>

## INTERNATIONAL SEARCH REPORT

| | International application No. |
|---|---|
| | **PCT/JP2024/010897** |

### A. CLASSIFICATION OF SUBJECT MATTER

***B32B 27/10***(2006.01)i; ***B32B 27/32***(2006.01)i; ***B32B 27/40***(2006.01)i; ***B65D 65/40***(2006.01)i
FI: B32B27/10; B32B27/32 Z; B32B27/40; B65D65/40 D

According to International Patent Classification (IPC) or to both national classification and IPC

### B. FIELDS SEARCHED

Minimum documentation searched (classification system followed by classification symbols)

D21B1/00-1/38;D21C1/00-11/14;D21D1/00-99/00;D21F1/00-13/12;D21G1/00-9/00;D21H11/00-27/42;D21J1/00-7/00;B3
2B1/00-43/00;C08K3/00-13/08;C08L1/00-101/14;B65D65/00-65/46

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2023-27649 A (OJI HOLDINGS CORPORATION) 02 March 2023 (2023-03-02) claim 1, paragraphs [0022]-[0051], [0059], [0079]-[0080], [0084]-[0086], [0091], [0101], examples | 1-7, 9 |
| Y | paragraphs [0084]-[0086] | 7 |
| A | | 8 |
| X | JP 2021-20398 A (OJI HOLDINGS CORPORATION) 18 February 2021 (2021-02-18) claims 1, 3, paragraphs [0017]-[0041], [0044], examples | 1-4, 6-7, 9 |
| Y | claims 1, 3, paragraphs [0017]-[0041], [0044], examples | 5 |
| Y | examples | 7 |
| A | | 8 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 June 2024** | **18 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/010897**

### C. DOCUMENTS CONSIDERED TO BE RELEVANT

| Category* | Citation of document, with indication, where appropriate, of the relevant passages | Relevant to claim No. |
|---|---|---|
| X | JP 2021-138434 A (HOKUETSU CORPORATION CO., LTD.) 16 September 2021 (2021-09-16)<br>claims 1, 7, paragraphs [0016], [0032], examples | 1-4, 6, 9 |
| Y | claims 1, 7, paragraphs [0016], [0032], examples | 5, 7 |
| A | | 8 |
| Y | WO 2015/016069 A1 (MITSUI CHEMICALS, INC.) 05 February 2015 (2015-02-05)<br>claim 1, paragraphs [0061]-[0064], [0242], examples | 5 |
| A | WO 2021/106891 A1 (OJI HOLDINGS CORPORATION) 03 June 2021 (2021-06-03) | 1-9 |
| A | JP 2001-49054 A (SUMITOMO SEIKA CHEMICALS CO., LTD.) 20 February 2001 (2001-02-20) | 1-9 |
| A | WO 2022/071261 A1 (DIC GRAPHICS CORP.) 07 April 2022 (2022-04-07) | 1-9 |

Form PCT/ISA/210 (second sheet) (July 2022)

## INTERNATIONAL SEARCH REPORT
### Information on patent family members

International application No.

**PCT/JP2024/010897**

| Patent document cited in search report | | | Publication date (day/month/year) | Patent family member(s) | | | Publication date (day/month/year) |
|---|---|---|---|---|---|---|---|
| JP | 2023-27649 | A | 02 March 2023 | (Family: none) | | | |
| JP | 2021-20398 | A | 18 February 2021 | (Family: none) | | | |
| JP | 2021-138434 | A | 16 September 2021 | (Family: none) | | | |
| WO | 2015/016069 | A1 | 05 February 2015 | US | 2016/0159965 | A1 | |
| | | | | claims 1-3, paragraphs [0062]-[0063], [0249] | | | |
| | | | | EP | 3029082 | A1 | |
| | | | | CN | 105408378 | A | |
| WO | 2021/106891 | A1 | 03 June 2021 | EP | 4067078 | A1 | |
| JP | 2001-49054 | A | 20 February 2001 | (Family: none) | | | |
| WO | 2022/071261 | A1 | 07 April 2022 | CN | 116134193 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022155999 A
- JP 2015044396 A
- JP 2021115802 A